# EUROPÄISCHE PATENTSCHRIFT

(11) **EP 1 534 450 B1**
(45) Veröffentlichungstag und Bekanntmachung des Hinweises auf die Patenterteilung: **02.11.2006**
(21) Anmeldenummer: 03725125.3
(22) Anmeldetag: 30.04.2003
(51) Int. Cl.: B22D 19/10, B23P 6/04, F01D 5/00

(54) **VERFAHREN ZUM VERSCHLIESSEN EINER ÖFFNUNG EINES BAUTEILS**
METHOD FOR CLOSING AN APERTURE IN A COMPONENT
PROCEDE POUR FERMER UN ORIFICE D'UN ELEMENT

(30) Priorität: 06.09.2002 EP 02020085
(43) Veröffentlichungstag der Anmeldung: 01.06.2005
(73) Patentinhaber: SIEMENS AKTIENGESELLSCHAFT, 80333 München (DE)
(72) Erfinder: BECK, Thomas, 16341 Zepernick (DE); BOSTANJOGLO, Georg, 12161 Berlin (DE); BUBLATH, Boris, 13581 Berlin (DE); SETTEGAST, Silke, 10439 Berlin (DE)
(86) Internationale Anmeldenummer: PCT/EP2003/004565
(87) Internationale Veröffentlichungsnummer: WO 2004/022266

(56) Entgegenhaltungen:
- EP-A- 0 861 927
- EP-A- 1 074 331
- DE-C- 512 347
- FR-A- 929 078
- GB-A- 155 471
- GB-A- 159 914
- GB-A- 946 645
- US-A- 3 934 107
- KEITEL S ET AL: "AUSGEWAEHLTE BEISPIELE ZUM LASERSTRAHLSCHWEISSEN1)" SCHWEISSEN UND SCHNEIDEN, DEUTSCHER VERLAG FUR SCHWEISSTECHNIK. DUSSELDORF, DE, Bd. 44, Nr. 2, 1. Februar 1992 (1992-02-01), Seiten 74-77, XP000247235 ISSN: 0036-7184

## Beschreibung

Die Erfindung betrifft ein Verfahren zum Verschließen einer Öffnung eines Bauteils gemäß dem Gattungsbegriff des Anspruchs 1.

Herstellungsbedingt, insbesondere beim Gießen von hohlen Bauteilen wie z.B. von Turbinenschaufeln, sind Öffnungen an dem Bauteil vorhanden, die bei der Verwendung des Bauteils verschlossen sein müssen.

Die EP 892 090 A1 zeigt ein Verfahren zur Reparatur eines dreidimensionalen Körpers, bei dem eine Schicht aufgetragen wird.

Die EP 0 861 927 A1 offenbart das Herstellen einkristalliner Strukturen auf einem Substrat mit einkristalliner Struktur und kann für die Reparatur von einkristallinen Produkten wie Turbinenschaufeln verwendet werden. Dabei wird Material auf das Substrat aufgebracht, aufgeschmolzen und durch entsprechende Abkühlung oder Temperaturgradienten eine gerichtet erstarrte Struktur erzeugt.

Der Verschluss dieser Öffnungen soll auch unter den Betriebsbedingungen des Bauteils dieselben Eigenschaften aufweisen, wie das Material des Bauteils, so dass sich der Verschluss nicht wieder öffnet.

Nach dem Stand der Technik werden oft Kerne eingelötet, wobei das Lot eine geringere mechanische Festigkeit, insbesondere bei hohen Temperaturen, aufweist, so dass sich der Kern lösen kann.

Es ist daher Aufgabe der Erfindung dieses Problem zu überwinden.

Die Aufgabe wird gelöst durch ein Verfahren gemäß Anspruch 1. In den Unteransprüchen sind weitere vorteilhafte Verfahrensschritte aufgelistet.
Die in den Unteransprüchen aufgeführten Massnahmen können in vorteilhafter Art und Weise miteinander kombiniert werden.

Die in den Unteransprüchen aufgeführten Maßnahmen können in vorteilhafter Art und Weise miteinander kombiniert werden.

Ausführungsbeispiele sind in den Figuren schematisch dargestellt.

Es zeigen
- Figur 1: eine Öffnung eines Bauteils,
- Figur 2: eine Haltsicherung in einer Öffnung,
- Figur 3: eine weitere Anbringungsmöglichkeit einer Haltungssicherung in einer Öffnung eines Bauteils,
- Figur 4: eine erste Möglichkeit Material in die Öffnung einzuführen,
- Figur 5: eine weitere Möglichkeit Material in die Öffnung einzuführen,
- Figur 6: ein Bauteil mit verschlossener Öffnung, und
- Figur 7: eine weitere Möglichkeit eine Öffnung eines Bauteils zu verschließen.

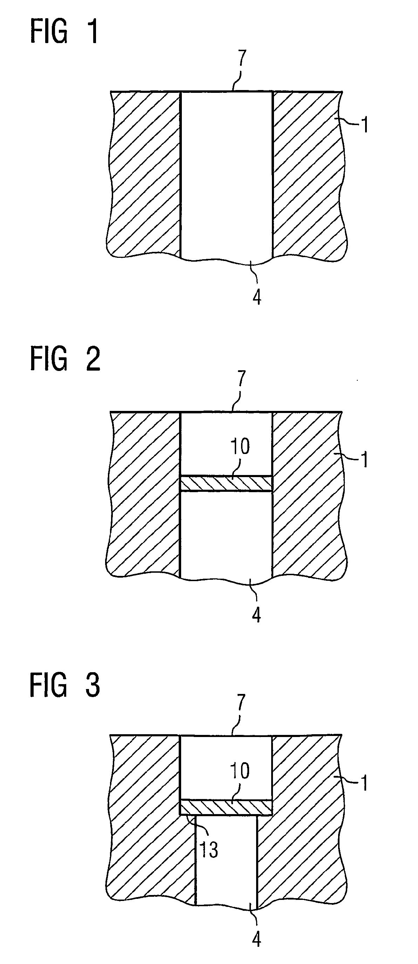

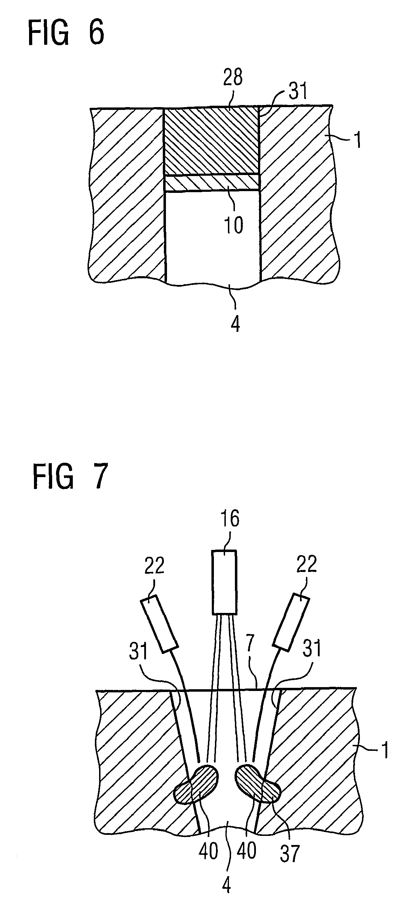

Figur 1 zeigt ein Bauteil 1 mit einer Öffnung 4.
Die Öffnung 4 weist an einer Außenseite des Bauteils 1 eine entsprechende Öffnungsquerschnittsfläche 7 (= Aussenseite von Öffnung 4) auf.
Die Öffnung 4 ist bspw. zylindrisch oder konisch (Fig. 7) ausgeführt.
Die Öffnung 4 ist beispielsweise eine Gusskernöffnung 4 einer mittels eines Gießverfahrens hergestellten Turbinenschaufel, und bspw. auch ein Hohlkörper. Diese Gusskernöffnung 4 muss für den weiteren Gebrauch der Turbinenschaufel 1 verschlossen werden.

Figur 2 zeigt ausgehend von Figur 1 die Einbringung einer Haltesicherung 10 in die Öffnung 4.

Die Haltesicherung weist eine einkristalline oder gerichtet erstarrte Struktur auf (bzgl. gerichtet erstarrte Strukturen siehe EP 861 927 A1 und die EP 892 090 A1).
Die Haltesicherung 10 dient dazu, ein in die Öffnung 4 einzubringendes Material zum Verschließen der Öffnung 4 daran zu hindern, während des Einbringens durch die Öffnung 4 hindurchzurutschen. Sie stellt gleichsam einen provisorischen Verschluss des Querschnitts der Öffnung 4 dar.
Die Haltesicherung 10 ist beispielsweise auch nur ein Blech, das bspw. mechanisch innerhalb der Öffnung 4 eingeklemmt wird. Weitere Befestigungsmöglichkeiten sind denkbar. Die Haltesicherung 10 kann nach dem Verschließen der Öffnung 4 wieder entfernt werden.

Eine weitere Möglichkeit der Anordnung einer Haltesicherung 10 in der Öffnung 4 ist in Figur 3 gezeigt.
Innerhalb der Öffnung 4 ist ein Absatz 13 vorhanden, auf dem die Haltesicherung 10 aufliegt, ohne dass die Haltesicherung weiter befestigt ist.
Nach Einbringen von Material 25 in die Öffnung 4, kann die Haltesicherung 10 nicht aus der Öffnung 4 herausfallen, sondern ist zwischen Absatz 13 und einem Verschluss 28 (Fig. 6) festgeklemmt.
Die Haltesicherung 10 dient dazu, dass das Material 25 eine Auflage (Boden) hat, so dass kein Material 25 tiefer in die Öffnung 4 gelangen kann.

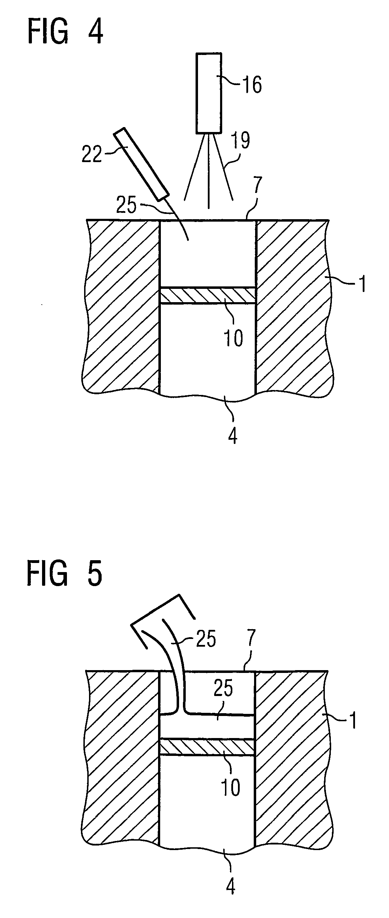

Figur 4 zeigt eine erste Möglichkeit Material 25 in die Öffnung 4 einzubringen.
Die Haltesicherung 10 dient dazu, dass das Material 25, das in die Öffnung 4 eingeführt wird, nicht das ganze Volumen der Öffnung 4 ausfüllt, sondern nur einen oberen Teil der Öffnung 4 im Bereich bis maximal zur Öffnungsquerschnittsfläche 7.

In diesem Beispiel wird Material 25 über zumindest eine Materialzufuhr 22 in die Öffnung 4 oberhalb der Haltesicherung 10 eingeführt.
Beispielsweise ist dies Pulver 25, das mittels zumindest eines Lasers 16 und seiner Laserstrahlen 19 in der Öffnung 4 bspw. aufgeschmolzen und bspw. epitaktisch erstarren gelassen wird. Dies geschieht durch Laserauftragsschweissen (EP 861 927 A1 und die EP 892 090 A1).
Dies erfolgt bspw. solange bis das Material 25 bis zu der Öffnungsquerschnittsfläche 7 gelangt.
Eine einkristalline oder gerichtet erstarrte Haltesicherung 10 erleichtert das Herstellen einer einkristallinen oder gerichtet erstarrten Struktur in der zu schliessenden und aufzufüllenden Öffnung 4.
Ebenso ist es möglich, dass das Material 25 durch den Laser 16 oder eine andere Energiequelle 16 erwärmt wird und versintert und sich in der Öffnung 4 verankert.
Bezüglich der Wachstumsbedingungen zum Herstellen von kristallinen Strukturen mittels epitaktischem Wachstum ist hier auf die EP 892 090 A1 verwiesen.

Figur 5 zeigt eine weitere Möglichkeit der Anbringung von Material in die Öffnung 4.
In diesem Ausführungsbeispiel wird eine Schmelze 25 des Materials 25 in die Öffnung 4 oberhalb der Haltesicherung 10 eingegossen bis das Material 25 bspw. bis zu der Öffnungsquerschnittsfläche 7 gelangt.
Die Schmelze erstarrt, insbesondere gerichtet erstarrt, weil eine gerichtet erstarrte Haltesicherung 10 vorhanden ist, und ist somit fest in der Öffnung 4 angeordnet.

Figur 6 zeigt ein Bauteil, bei dem eine Öffnung 4 mittels eines erfindungsgemäßen Verfahrens verschlossen worden ist. In der Öffnung 4 oberhalb der Haltesicherung 10 ist jetzt durch die Zufuhr von Metall ein Verschluss 28 vorhanden, der die Öffnung 4 zu seiner Außenseite 7 bspw. bündig abschliesst.
Insbesondere durch das Gießverfahren oder das epitaktische Erstarren wird an einer Kontaktfläche 31 zwischen der Öffnung 4 und des Verschlusses 28 eine gute Verbindung aufgebaut, so dass eine hinreichend große mechanische Festigkeit zwischen dem Verschluss 28 und dem Material des Bauteils 1 vorliegt. Die Kontaktfläche 31 kann beim epitaktischen Wachstum mit aufgeschmolzen werden.

Figur 7 zeigt als alternative Lösung der Erfindung eine Möglichkeit, eine Öffnung 4 ohne Haltesicherung zu verschliessen.
Ein Bereich 37 der Innenfläche 31 der Öffnung 4 wird bspw. durch einen Laser 16 aufgeschmolzen.
Dann wird Material über eine Materialzufuhr 22 dem aufgeschmolzenen Bereich 37 zugeführt.
Es können auch mehrere Bereiche 37 und entsprechend mehrere Materialzufuhren 22 gleichzeitig verwendet werden.
Das zugeführte Material wird bspw. aufgeschmolzen und erstarren gelassen oder versintert, so dass sich ein Vorsprung 40 bildet.
In einem nächsten Verfahrensschritt wird der Vorsprung 40 bspw. an seiner Oberfläche teilweise aufgeschmolzen und wiederum Material zugeführt, das auf dem Vorsprung 40 aufgeschmolzen und erstarren gelassen wird.
Dies wird wiederholt bis der Vorsprung 40 so vergrössert ist, dass die Öffnung 4 verschlossen ist.
Ebenso kann durch Zufuhr von Material 25 und Versinterung des Materials 25 der Vorsprung 40 vergrössert werden.
Die verschlossene Öffnung 4 kann wie in den Figuren 4, 5 und 6 aufgefüllt werden, insbesondere auch durch gerichtete Erstarrung des zugeführten Materials 25 bspw. mittels Laserauftragsschweissen.

Die Öffnung 4 weist in diesem Beispiel einen konischen Querschnitt auf, der sich zur Oberfläche 7 hin vergrössert.

Das Material 25, das in die Öffnung 4 eingeführt wird, entspricht vorzugsweise dem Material des Bauteils 1 in der chemischen Zusammensetzung und/oder Kristallorientierung in der Umgebung der Öffnung 4, d.h. das Bauteil 1 weist eine einkristalline oder gerichtet erstarrte Struktur auf.
Die beiden alternativen Lösungen der Erfindung sehen jeweils vor, dass das zum Verschließen der Öffnung 4 eingebrachte Material stoffschlüssig mit der Innenoberfläche der Öffnung 4 verbunden wird.

Die Oberfläche des Bauteils 1, also auch die Oberfläche des aufgefüllten Bereichs, kann nachbearbeitet werden.

## Patentansprüche

1. Verfahren zum Verschließen einer Öffnung eines Bauteils
**dadurch gekennzeichnet,**
**dass** ein Bereich (37) der Innenfläche (31) der Öffnung (4) aufgeschmolzen wird,
dem dann Material (25) zugeführt wird,
das in dem Bereich (37) aufgeschmolzen und erstarren gelassen wird,
das dann einen Vorsprung (40) in der Öffnung (4) bildet, dass in mindestens einem weiteren Schritt auch der Vorsprung (40) teilweise aufgeschmolzen wird,
dann Material (25) zugeführt wird,
das auf dem Vorsprung (40) aufgeschmolzen und erstarren gelassen wird,
und so den Vorsprung (40) vergrössert, bis die Öffnung (4) vollständig verschlossen ist.

2. Verfahren nach Anspruch 1,
**dadurch gekennzeichnet, dass**
die Haltesicherung (10) nach dem Verschließen der Öffnung (4) mit dem Material (25) entfernt wird.

3. Verfahren nach Anspruch 1,
**dadurch gekennzeichnet, dass**
in die Öffnung (4) Material (25) als Schmelze (25) eingegossen wird.

4. Verfahren nach Anspruch 1,
**dadurch gekennzeichnet, dass**
die Öffnung (4) durch Laserauftragsschweißen verschlossen und/oder aufgefüllt wird.

5. Verfahren nach Anspruch 1,
**dadurch gekennzeichnet, dass**
das Material des Bauteils (1) eine Superlegierung, insbesondere eine Nickel- oder Kobalt-basierte Superlegierung ist.

6. Verfahren nach Anspruch 1,
**dadurch gekennzeichnet, dass**
das Bauteil (1) eine Turbinenschaufel ist.

7. Verfahren nach Anspruch 1,
**dadurch gekennzeichnet, dass**
eine Gusskernöffnung (4) des Bauteils (10) verschlossen wird.

8. Verfahren nach Anspruch 1,
**dadurch gekennzeichnet, dass**
das Material (25),
das in die Öffnung (4) eingeführt wird,
dem Material des Bauteils (1) in der chemischen Zusammensetzung und/oder Kristallorientierung in der Umgebung der Öffnung (4) entspricht.

9. Verfahren nach Anspruch 1,
**dadurch gekennzeichnet, dass**
die Öffnung (4) einen konischen Querschnitt aufweist.

10. Verfahren nach Anspruch 1,
**dadurch gekennzeichnet, dass**
das Bauteil (10) ein Hohlkörper ist.

## Claims

1. Method for sealing an opening of a component, **characterized in that** a region (37) of the inner surface (31) of the opening (4) is melted, then material (25) is added to it, which is melted and allowed to solidify in the region (37), and which then forms a projection (40) in the opening (4), **in that** the projection (40) is also at least partially melted in at least one further step, then material (25) is added, which is melted and allowed to solidify on the projection (40), and the projection (40) is thus an enlarged until the opening (4) is fully sealed.

2. Method according to Claim 1, **characterized in that** the retaining support (10) is removed after sealing the opening (4) with the material (25).

3. Method according to Claim 1, **characterized in that** material (25) is cast as a melt (25) into the opening (4).

4. Method according to Claim 1, **characterized in that** the opening (4) is sealed and/or filled by laser deposition welding.

5. Method according to Claim 1, **characterized in that** the material of the component (1) is a superalloy, in particular a nickel- or cobalt-based superalloy.

6. Method according to Claim 1, **characterized in that** the component (1) is a turbine blade.

7. Method according to Claim 1, **characterized in that** a casting insert opening (4) of the component (10) is sealed.

8. Method according to Claim 1, **characterized in that** the material (25), which is introduced into the opening (4), corresponds in chemical composition and/or crystal orientation to the material of the component (1) in the environment of the opening (4).

9. Method according to Claim 1, **characterized in that** the opening (4) has a conical cross section.

10. Method according to Claim 1, **characterized in that** the component (10) is a hollow body.

## Revendications

1. Procédé de fermeture d'un orifice d'un élément, **caractérisé**
**en ce que** l'on fait fondre une partie (37) de la surface (31) intérieure de l'orifice (4) ;
**en ce que** l'on apporte ensuite de la matière (25),
que l'on laisse fondre et se solidifier dans la partie (37) ;
**en ce que** l'on forme ensuite une saillie (40) dans l'ouverture (4) ;
**en ce que**, dans au moins un autre stade, on fait fondre aussi en partie la saillie (40) ;
puis, en ce que l'on apporte de la matière (25),
que l'on laisse fondre et se solidifier sur la saillie (40) ;
et que l'on agrandit ainsi la saillie (40) jusqu'à ce que l'orifice (4) soit fermé complètement.

2. Procédé suivant la revendication 1, **caractérisé en ce que** l'on élimine le dispositif (10) de maintien après la fermeture de l'orifice (4) par la matière (25).

3. Procédé suivant la revendication 1, **caractérisé en ce que** l'on verse dans l'orifice (4) de la matière (25) sous la forme d'une masse (25) fondue.

4. Procédé suivant la revendication 1, **caractérisé en ce que** l'on ferme et/ou remplit l'orifice (4) par soudage avec dépôt laser.

5. Procédé suivant la revendication 1, **caractérisé en ce que** la matière de l'élément (1) est un superalliage, notamment un superalliage à base de nickel ou à base de cobalt.

6. Procédé suivant la revendication 1, **caractérisé en ce que** l'élément (1) est une aube de turbine.

7. Procédé suivant la revendication 1, **caractérisé en ce que** l'on ferme un orifice (4) de noyau de coulée de l'élément (10).

8. Procédé suivant la revendication 1, **caractérisé en ce que** la matière (25),
qui est introduite dans l'orifice (4),
correspond à la matière de l'élément (1) par la composition chimique et/ou l'orientation cristalline au voisinage de l'orifice (4).

9. Procédé suivant la revendication 1, **caractérisé en ce que** l'orifice (4) a une section transversale conique.

10. Procédé suivant la revendication 1, **caractérisé en ce que** l'élément (1) est une pièce creuse.
